# EUROPEAN PATENT APPLICATION

(11) **EP 2 017 076 A1**
(43) Date of publication of application: **21.01.2009**
(21) Application number: 07445028.9
(22) Date of filing: 09.07.2007
(51) Int. Cl.: B32B 29/00, D21H 17/01

(54) **Flame resistant cardboard or fibre laminate**

(71) Applicant: Oppboga Bruk AB, 710 41 Fellingsbro (SE)
(72) Inventor: Johansson, Bernt, 71041 Fellingsbro (SE)
(74) Representative: Falk, Bengt

(57) **Abstract**

A flame resistant cardboard or fibre-laminate with flame retardant components characterised in that the cardboard or fibrelaminate is made of recycled cardboard paper.

## Description

The invention concerns a flame resistant cardboard or fibre laminate with flame retardant components.

Flame resistant cardboards or fibre laminates are used in various areas such as a support material for screen-print; e.g. for advertising in stores etc. or for signs standing outside in cities, traffic information for vehicles, pedestrians or as a base material for transport boxes; e.g. for transport of heat sensitive materials like explosives, or as laminates in inner walls of buildings. In condition of the application of the cardboard or the laminate the material need to fulfil different requirements, like mechanical strength when used in buildings, or it should be relative flexible when used for transport boxes to withstand the handling during transport. If the cardboard is used as a support material for screen prints the material should be relative stiff although the material does not need to have high bending or tensioning strength.

Flame resistant cardboards are known for example from EP 0 050 448 A1, where it is suggested to use a plurality of thermoset resin impregnated filler sheets bonded together into a unitary member. The filler sheets comprise a certain amount of inorganic filler, cellulose fibres and resinous binders.

EP 166665 A1 discloses a flame resistant paper with a Borax-solution, which is designed by using ammonium phosphate. All solutions in the prior art need added flame retardant components, which are expansive and are environmental unfriendly.

Furthermore the production method is relatively complicated and requires a complex production device.

The object of the invention is to provide an environmental friendly and cheap flame resistant cardboard or fibre laminate.

The invention solves this object by using recycled cardboard for the cardboard or fibre laminate.

Further aspects on the cardboard or fibre laminate, according to the invention, are;
the cardboard or fibre-laminate is made of recycled cardboard papers.
the flame retardant components are small fragments of glasses, metals and/or minerals.
the cardboard or fibre-laminate is provided with a coating layer.
the coating layer comprise kaolin, calcium carbonate, titan oxide, gypsum and/or a latex-polymer e.g. polycarbonate, polystyrene or polyvinyl.
the weight of the coating layer at the cardboard or fibre-laminate is between 10-100 gram/m², preferably 20 gram/m².
several layers, preferable 4 to 5 are connected to a multilayer cardboard or fibre-laminate.
the layer on the top and the layer at the bottom are provided with the coating layer and the coating layer is arranged at the outwardly directed side of the layer with respect to the already assembled multilayer cardboard or fibre-laminate.
at least one of the intermediate layers is provided with a coating layer.
the layers are joint together by glue comprising polyvinyl acetate polymer dispersion.
the density of the cardboard or fibre laminate is between 0,85-0,95 kg/m³, preferably 0,90 kg/m³.
the weight of the cardboard or fibre-laminate is 180 gram/m².

The advantage of the invention is that recycled cardboard contains already the necessary flame retardant components, so additional flame retardant can be saved, which reduces costs and negative environmental impact.

Recycled cardboard has a composition that has a better heat or flame resistance than ordinary cardboard. The composition of recycled cardboard is, especially when recycled cardboard is produced in big amounts, reliable constant and contains already the necessary flame retardant to achieve the required flame resistant. Fibres in recycled cardboards are generally shorter than in ordinary cardboards, allowing a more dense cardboard, with less free space containing oxygen, thus providing a higher flame resistance.These flame retardant components are preferably small fragments of glasses, minerals and metals.

The flame resistance can be further improved by using paint or coating layer at the cardboard, which can consist of one of the in claim 4 listed components.
A very good compromise between flame resistance and a cost efficient production process is given, when the weight of the coating layer is approximately between 10-100 gram/m², preferably 20 gram/m².

To improve the flame resistance further it is suggested to joint several layers to a multilayer cardboard, while one layer should have a density of 0,85-0,95 kg/m³, preferably 0,90 kg/m³, and a weight of at least 180 gram/m², preferably 180 gram/m².

Normally, when making cardboards for screen-print the cardboard density is relatively low to meet requirements in weight, stiffness and price. It has been shown, however, that by using cardboard with a higher density, although still fulfilling requirements in weight, stiffness and price, the flame resistance has been improved substantially.

It has been shown that 4-5 layers joined together by a glue comprising a dispersion of polyvinyl-acetone polymer glue is optimal regarding the production process, the requirements on mechanical strength and to the necessary flame resistance.

When a multilayer cardboard or fibre laminate is used, the coated layers of the cardboard or fibre laminate on the top and at the bottom should be located at the outer side of the cardboard.
The invention is described in the following with a preferred embodiment shown in:
Fig.1 cardboard or fibrelaminate according to the invention
Fig.2 production arrangement for a continuous production of cardboards or fibre laminates

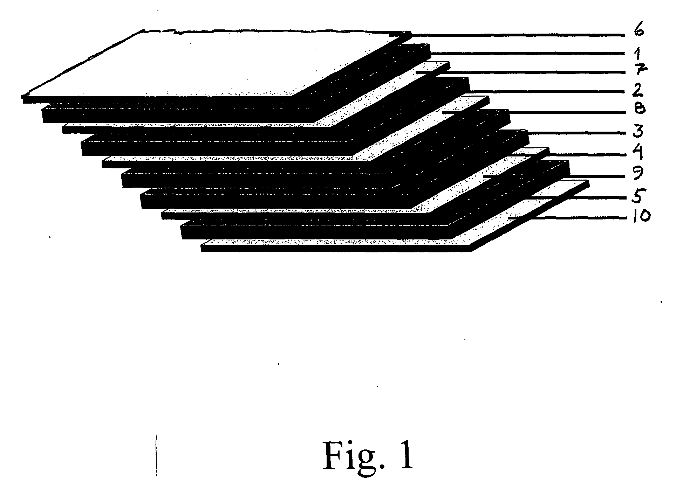

In Fig.1 it is shown a multilayer cardboard 100 consisting of five single cardboard or fibre laminates 1,2,3,4 and 5, in the following called only cardboard.

Each single cardboard 1,2,3,4 and 5 comprises a paint layer 6,7,8,9 and 10. The coating layers 6 and 10 of the top cardboard 1 and of the bottom cardboard 5 are located at the outside of the cardboard 100.

This means the coating layers 6, 7 and 8 are located at the top of the cardboards 1, 2 and 3, while the coating layers 9 and 10 are located at the downside of the lower cardboards 4 and 5. Therefore two of the intermediate cardboard 3 and 4 are connected directly to each other without having a coating layer between them.

The cardboards are made of recycled paper, which has a composition that has a better heat or flame resistance than ordinary cardboards. These flame retardant components are preferably small fragments of glasses, minerals and metals, which are created in the recycling process automatically, because used paper usually contains always a minimum of paint particles or particles from coatings, rests of glass, minerals, metals etc.

Usually, these particles are normally understood as a contamination, but in this case the invention uses them as an advantage by using them as flame retardant components instead of adding additional components like known in the prior art.

By saving additional components the costs for each cardboard can be essentially reduced, because the production process itself could be reduced by several production steps and the costs for the components can be saved. Furthermore, the inventive cardboard is a very environmental friendly solution, because the necessary input of additional chemical components is eliminated.

One single cardboard layer 1,2,3,4,5 should have a density of 0,85-0,95 kg/m³, preferably 0,90 kg/m³, and a weight of at least 180 gram/m², preferably 180 gram/m², the single cardboard layers 1,2,3,4,5 are joined together by using a glue comprising of Polyvinyl acetate polymeric dispersion.

The weight of the coated layers 6, 7, 8,9,10 is between 10 and 100 gram/ m², preferably 20 gram/m², so that each single coated cardboard has a total weight of 200 gram/m².

The coated layers 6, 7, 8,9,10 comprise of kaolin, calcium carbonate, titan oxide, gypsum and/or a latex-polymer e.g. polycarbonate, polystyrene or polyvinyl.

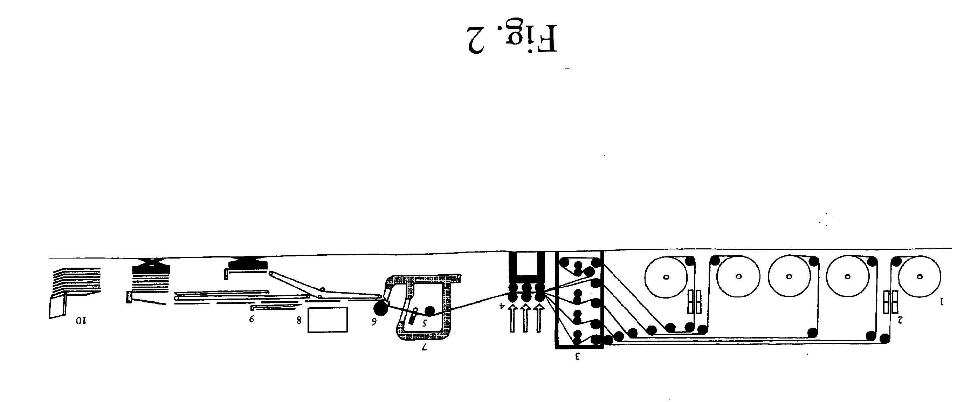

In Fig.2 it is shown a schematic arrangement of a device for a continuous production of cardboards according to the invention. The recycled material is stored on five support wheels 1, wherein the recycled material is already coated with the suggested coating layer.

The support wheels 1 can be operated individually by automatic brakes to provide flat layers and reduce spill. After leaving the support wheels 1 the recycled paper of the top layer and the bottom layer is dried by dryers 2, preferably infrared dryers, to regulate the moisture. It is also possible to dry the intermediate layers if necessary (not shown in the figure).In the gluing station 3 all five layers are provided with the dispersion glue. After leaving the gluing station 3 the layers are pressed together by three pairs of pressing wheels in the pressing station 4. The ready pressed multilayer is then cleaned in the vacuum cleaner 7, to remove any superfluous dust. After the cleaning process the cardboards are cut to a predetermined width by knifes 5 and to predetermined lengths by a rolling knife 6. In a next operating step bad cardboards are sorted out in a sorting station 8, before they are controlled regarding correct dimensions and surface quality in the control station 9. Finally, in station 10 the cardboards are cut with a guillotine to final exact dimensions.

## Claims

1. Flame resistant cardboard or fibre-laminate with flame retardant components **characterised in, that** the cardboard or fibre-laminate is made of recycled cardboard papers.

2. Flame resistant cardboard or fibre-laminate according to claim 1, **characterised in, that** the flame retardant components are small fragments of glasses, metals and/or minerals.

3. Flame resistant cardboard or fibre-laminate according to claim 1 or 2, **characterised in, that** the cardboard or fibre-laminate is provided with a coating layer.

4. Flame resistant cardboard or fibre-laminate according to claim 3, **characterised in, that** the coating layer comprise kaolin, calcium carbonate, titan oxide, gypsum and/or a latex-polymer e.g. polycarbonate, polystyrene or polyvinyl.

5. Flame resistant cardboard or fibre-laminate according to claim 3 or 4, **characterised in, that** weight of the coating layer at the cardboard or fibre-laminate is between 10-100 gram/m², preferably 20 gram/m².

6. Flame resistant cardboard or fibre-laminate according to one of the preceding claims, that several layers, preferable 4 to 5 are connected to a multilayer cardboard or fibre-laminate.

7. Flame resistant cardboard or fibre-laminate according to claim 6 in combination with claim 3, 4 or 5, **characterised in that** the layer on the top and the layer at the bottom are provided with the coating layer and the coating layer is arranged at the outwardly directed side of the layer with respect to the already assembled multilayer cardboard or fibre-laminate.

8. Flame resistant cardboard or fibre-laminate according to claim 6 or 7 in combination with claim 3, 4 or 5, **characterised in, that** at least one of the intermediate layers is provided with a coating layer.

9. Flame resistant cardboard or fibre-laminate according to claim 6, **characterised in, that** the layers are joint together by glue comprising polyvinyl acetate polymer dispersion.

10. Flame resistant cardboard or fibre-laminate according to one of the preceding claims, **characterised in, that** density of the cardboard or fibre laminate is between 0,85-0,95 kg/m³, preferably 0,90 kg/m³.

11. Flame resistant cardboard or fibre-laminate according to one of the preceding claims, **characterised in, that** the weight of the cardboard or fibre-laminate is 180 gram/m².
